# EUROPEAN PATENT APPLICATION

(11) **EP 4 575 096 A1**
(43) Date of publication of application: **25.06.2025**
(21) Application number: 24221304.9
(22) Date of filing: 18.12.2024
(51) Int. Cl.: E01H 5/06, E01H 11/00, E02F 9/26

(54) **METHOD FOR SUPPORTING AN EXECUTION OF A MISSION OF AN AGRICULTURAL OR WORK VEHICLE AND A CONTROL UNIT IMPLEMENTING THE METHOD**

(30) Priority: 22.12.2023 IT 202300027855
(71) Applicant: CNH Industrial Italia S.p.A., 10156 Torino (IT)
(72) Inventor: Nistler, Jonathan, 10156 Turin (IT); Gravili, Andrea, 10156 Turin (IT); Venezia, Antonio, 10156 Turin (IT); Liberti, Stefano, 10156 Turin (IT); De Giorgi, Simone, 10156 Turin (IT)
(74) Representative: CNH Industrial IP Department

(57) **Abstract**

Method of supporting the completion of a mission of an agricultural or work vehicle operated by computer, in which the vehicle is equipped with an articulated arm (A) connected to the chassis (F) of the vehicle such as to assume a plurality of operational configurations, a propulsion system such as to allow movement of the vehicle with respect to a support surface. the method includes (Step 1) Observation, for a predetermined time interval, of a frequency and duration of each operational configuration, and of activation of the propulsion system; (Step 2) Determining a current mission of the vehicle; (Step 3) checking whether said vehicle mission coincides with a cleaning mission of a support surface of the vehicle, and if so then Suggestion or activation of an arm Floating function, in which said cleaning function Floating is designed to keep the arm free to raise and lower by interaction with said support surface.

## Description

### Field of the invention

The present invention relates to a method for supporting the execution of a mission of an agricultural or work vehicle and a control unit implementing the method.

### State of the art

Agricultural or work vehicles are equipped with at least one work component, such as for example an arm or a lift and a transmission which has the purpose of allowing the travelling of the vehicle.

The transmission can be driven by a prime mover, usually internal combustion engine, although in recent years vehicles have been developed in which the prime mover is defined by an electric motor.

As regards the movement of work tools, such as arms, lifters, blades, etc., they are operated by hydraulic actuators.

A directional valve is arranged to connect one of the opposing chambers of a double-acting hydraulic actuator to a source of pressurized hydraulic oil and simultaneously the other chamber to a hydraulic oil collection tank, arranged at low pressure, typically at ambient pressure.

The source of pressurized hydraulic oil is generally a hydraulic pump driven in rotation by the prime mover or a dedicated electric motor.

It is known that the same vehicle can be involved in several missions. Some missions involve cycling through a sequence of vehicle movements. Furthermore, in the same mission, similar movements, for example the advancement of the vehicle, may require two different execution speeds. In fact, while a vehicle loads the material with the bucket in the excavation or "dig" position, the forward movement of the vehicle requires low speed and high torque. On the contrary, when the vehicle needs to move from the loading location to the unloading location, the forward movement of the vehicle requires a relatively higher speed and lower driving torque. It is clear that the driveline of the vehicle is designed to adapt to the working conditions, for example the displacement of the hydraulic motor is a function of the resistance torque detected, however the adaptation requires time, time lost in the execution of the mission and therefore in productivity of the vehicle.

More specifically, for construction vehicles equipped with an articulated arm, the speed of movement and precision of the arm depend on the type of mission.

The main missions for wheel loaders and excavators are:
- Loading onto trucks: removing material or soil by throwing it directly into a truck through a bucket;
- Hauling: transporting a load of material at various distances across a construction site using a bucket;
- Pick & Place: using the fork or the bale clamp accessory to pick up and lift the material and then place it in a destination on the ground or on a shelf;
- Stockpile: definition of a stockpile through the bucket, which is a pile or storage place for bulk materials, which is part of the process of handling bulk materials.

The excavator differs from the wheel loaders in that the arm is hinged to the cab and both can rotate with respect to a vertical axis integral with the lower portion of the vehicle.

Therefore, the first element of the excavator arm, connected to the upper frame of the vehicle, has two degrees of freedom: swing and tilt.

Some vehicle arms also have the ability to slideably extend in a telescopic manner.

Machine learning and deep learning are well-known concepts. The implementation of deep learning in all fields seems to have remarkable development.

The same Applicant is the owner of a European patent application no. 21217267 which describes a signal conditioning technique to be input to a neural network, for the purpose of recognizing a current mission of the vehicle.

The Applicant, after long experimentation, has identified parameters and functions relating to the work tools and/or transmission and/or on-board systems that can exploit the identification of the current mission of the vehicle.

Unless specifically excluded in the detailed description that follows, what is described in this chapter is to be considered as an integral part of the detailed description.

### Summary of the invention

The main purpose of the present invention is to facilitate the execution of a mission of an agricultural or work vehicle.

The basic idea of the present invention is to monitor the operations carried out by a work vehicle within a predetermined time interval and when it turns out that the mission coincides with a cleaning mission, then it is automatically activated or suggested to the operator activation of the Floating function.

The Floating function involves releasing the work arm so that it can rise and lower freely due to the roughness of the surface on which the work or agricultural vehicle moves.

The Floating function is used to clean a surface using the arm, for example to shovel snow or gravel or to remove roots and vegetation.

Failure to activate the Floating function may result in the breakage of the tool connected to the arm, such as a bucket or a rake.

From a hydraulic point of view, the Floating function can be achieved by short-circuiting the opposite chambers of the double-action hydraulic actuator that controls the lifting/lowering of the boom, or by connecting both opposite chambers with the oil collection tank hydraulic.

The monitoring is also based on the observation of the transmission, since, in relation to the speed of the vehicle and the configuration of the hydrostat, it is possible to discriminate between those missions having similar arm behaviour. In fact, the cleaning operation could be mistaken for a milling mission. However, milling and cleaning differ mainly in parameters obtainable from the vehicular transmission.

These and other objectives are achieved by means of the attached claims, which describe preferred embodiments of the invention, forming an integral part of the present description.

### Brief description of the figures

The invention will be fully clear from the following detailed description, provided as a purely illustrative and nonlimiting example, to be read with reference to the attached drawing figures, in which:
- Fig. 1 shows a work vehicle with its arm in any of the possible configurations it can assume,
- Figs. 2 - 4 show examples of human/machine interfaces. In particular, figure 2 shows a button panel, Fig. 3 an instrument panel and Fig. 4 a joystick;
- Fig. 5 shows an example of a flow diagram representative of the method object of the present invention.

The same reference numbers and letters in the figures designate equal or functionally equivalent parts.

According to the present invention, the term "second element" does not imply the presence of a "first element", first, second, etc. They are used only to enhance the clarity of the description and should not be construed in a restrictive manner.

### Detailed description

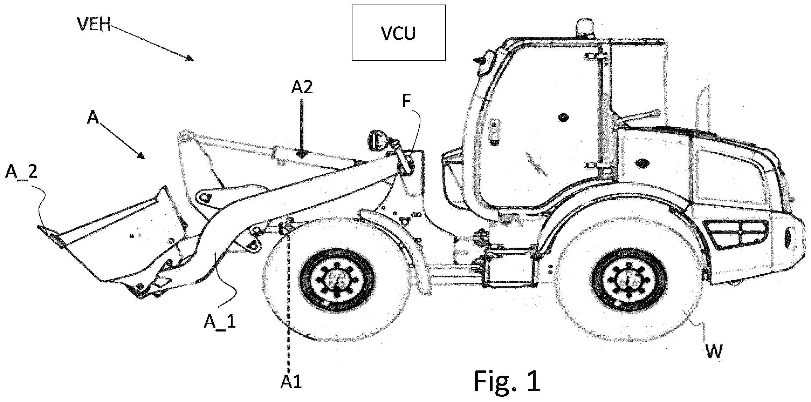

Fig. 1 illustrates a work vehicle such as a wheel loader VHE equipped with an arm A including a first element A_1, substantially elongated, hinged to the vehicle chassis F and a second element A_2, such as a bucket or a rake, hinged to the first element. More specifically, a first end of the first element is connected to the chassis F of the vehicle, while a second end, opposite to the first, supports the second element.

It is clear that the first element can assume more angular positions with respect to the F frame.

The hydraulic actuator A1 is arranged to control the angular position of the first element A_1 with respect to the vehicle chassis.

The hydraulic actuator A2 is arranged to control the angular position of the second element A_2 with respect to the first element A_1.

The hydraulic actuators A1, A2 are of the double action type, with two opposing chambers separated by a mobile partition integral with the stem of the respective actuator.

An electro-hydraulic valve, not shown, controls the connection of one of these opposing chambers alternatively with a source of hydraulic oil or with the hydraulic oil collection tank.

Generally, when one chamber is connected to the hydraulic oil source, the opposite chamber is connected to the collection tank.

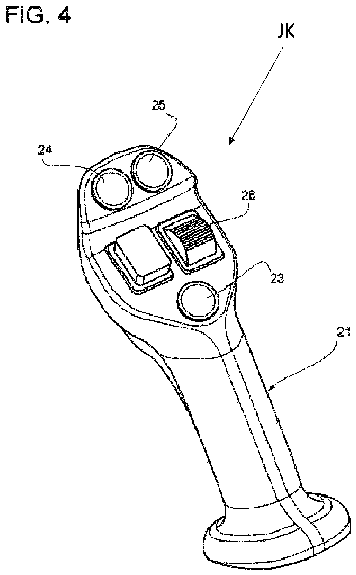

An electro-hydraulic valve, generally with an open centre, therefore takes care of the control of a respective actuator. The activation of the valve is instead controlled by a human/machine interface device, such as a joystick JK, shown in Fig. 4.

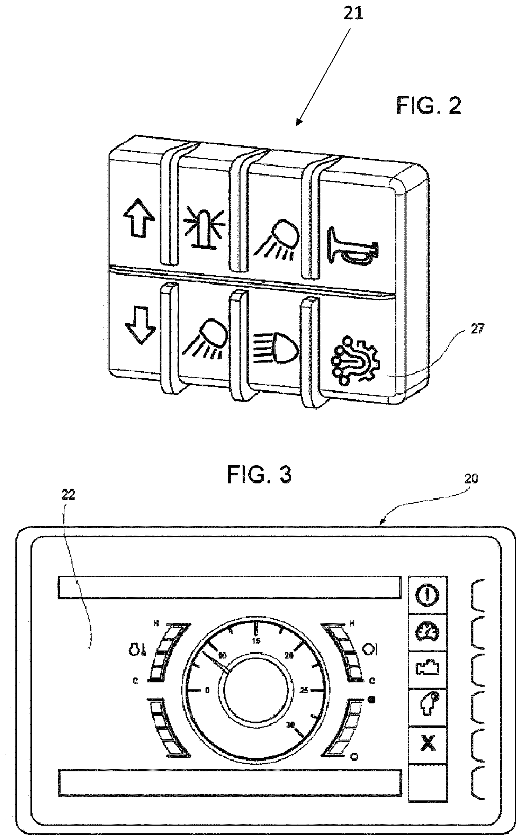

There may be various buttons on the joystick, the functionality of which can be fixed or programmable depending on the settings given by the operator via the button panel 21 in Fig. 2 or the instrument panel 20 shown in Fig. 3.

The joystick includes at least one button 23, 24, 25. Often it also includes a wheel 26 which allows adjustments to be made on some operational settings.

According to the present invention, a first software module is responsible for monitoring the configurations assumed by the arm and the activation of the propulsion system and determining the current mission of the vehicle.

Based on this recognition, it is verified whether the current mission coincides with a cleaning mission of the vehicle supporting surface and if so, the arm Floating function is suggested or activated.

Evidently, a second software module can be provided configured to receive the current recognized mission as input and to access a look up table in which the hydraulic functions and/or optimal operating parameters correlated with the current mission are listed.

More preferably, a processing unit VCU is configured to implement the first and second software modules and to control the instrument panel 20 in particular to reproduce messages via the respective display 22.

In particular, the processing unit is configured to check whether the optimal hydraulic function(s) and/or operating parameters are set or not.

In particular, the processing unit is configured to check whether the Floating function is already active. If it turns out that it is active, then nothing is suggested to the operator, otherwise, its activation is suggested, in response to the recognition of one of the aforementioned missions that require the activation of the Floating function.

Using one of the buttons at his disposal, the operator can set the automatic activation of the hydraulic functions and/or the setting of optimal parameters inherent to the current mission, handing control over to the processing unit VCU.

In this case, no suggestion is given, but the activation/setting of the functions and/or optimal operating parameters is automatically carried out and this activation/setting is notified if necessary.

Advantageously, the operator is given the possibility of making the vehicle automatically decide which functions/parameters to activate or of maintaining control of the activation of the functions/parameters, so that the vehicle limits itself, via the instrument panel, to displaying suggestions.

Among the parameters that can be set, in the case of cleaning the support surface of the vehicle, the displacement can be controlled of the hydraulic pump and/or of the hydraulic motor of the hydrostat that defines the vehicle transmission.

In particular, when snow is cleared, a first value of said parameter can be set or suggested, while when mud and debris is cleared, then a second value of said parameter is set or suggested and finally when cleaning consists of raking roots, a third value of said parameter is set or suggested, where the first, second and third values are different from each other. Advantageously, without intervening on the vehicle speed set by the operator, the transmission ratio can be modified to more easily cope with resistance torque peaks, especially when raking roots.

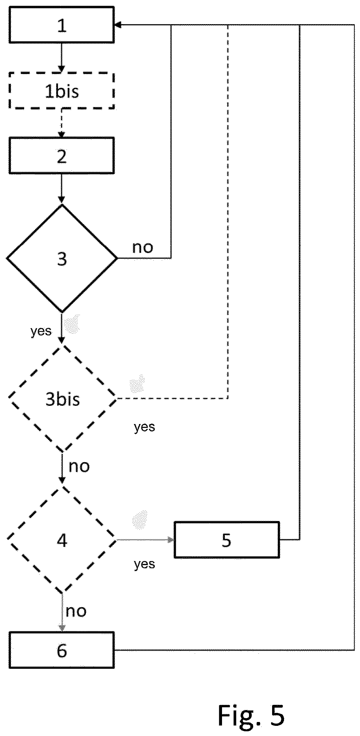

With reference to figure 5, an exemplary flow diagram of the present invention is shown. The dotted blocks are optional:
- Step 1: Observation of frequency and duration of each operational configuration of the arm and activation of the propulsion system;
- Step 2: determination of the vehicle current mission;
- Step 3: checking whether said vehicle mission coincides with a cleaning mission of a support surface of the vehicle;
- Step 4: optional checking whether the automatic activation of the hydraulic function(s) and/or parameter setting is active, if so,
- Step 5: automatic setting of the Floating function; or if not
- Step 6: suggestion to set the Floating function; otherwise, if the current mission is not a cleaning mission, restarting from the beginning.

After the Floating function has been set, either automatically or by the operator, the system returns to observing the operation of the arm and transmission and determining the current mission. If the current mission has changed then the flowchart is executed from Step 3, otherwise it returns to Step 1.

Therefore, to generalize the flow diagram, there may be a further Step 1bis, immediately after Step 1, in which the currently active hydraulic function(s) is acquired and immediately after step 3 there may be a Step 3bis checking whether the hydraulic functions and/or the parameters currently active are related to the cleaning mission, if so the cycle starts again from step 1, while if not it continues with steps 4 and following. This is to avoid giving unnecessary suggestions to the operator.

According to a preferred variant of the invention, the first software module is configured to detect the vehicle mission as a function of the frequency balance of the arm configurations and their respective time durations and as a function of the activation of the transmission and the frequency of the values discrete vehicle speeds and respective durations.

A position sensor is associated with each hydraulic actuator, therefore, it is immediate to acquire the operating configurations of the arm over time and analyse the frequency in discrete domains.

To make the solution easily implementable, the domains are segmented in such a way that the mutual positions of the elements composing the arm, which fall within a segment, are assumed to be approximately in the center of the same segment. For further details, see the Applicant's European patent application n.21217267.

It is worth highlighting that suggestions can be given to the operator not only through writings that appear on the instrument panel or by the flashing of a light associated with a button for activating a hydraulic function, but also through voice messages.

Likewise, the operator can confirm the activation of a hydraulic function vocally.

Therefore, the processing unit can advantageously be equipped with a speech synthesis module, an acoustic speaker and/or a microphone to give suggestions to the operator or to receive orders given by the operator.

Exemplary embodiments are provided so that this disclosure is complete and fully conveys the scope to those skilled in the art. Numerous specific details are set forth as examples of specific components, devices and methods, to provide a complete understanding of the embodiments of the present disclosure. It will be apparent to those skilled in the art that it is not necessary to employ specific details, that exemplary embodiments may be made in many different forms, and that neither should be construed to limit the scope of the disclosure. In some exemplary embodiments, well-known processes, well-known device structures, and well-known technologies are not described in detail.

The present invention may advantageously be implemented in a computer program comprising program code means for performing one or more steps of such method, when such program is executed on a computer. For this reason, the patent will also cover such computer program and computer readable medium comprising a recorded message, such computer readable medium comprising program code means for carrying out one or more steps of such method, when such program is run on a computer.

Many changes, modifications, variations and other uses and applications of the subject invention will be apparent to those skilled in the art after considering the accompanying description and drawings, which describe preferred embodiments thereof as described in the accompanying claims.

The features disclosed in the background of the prior art are introduced only to better understand the invention and not as a statement of the existence of the prior art. Furthermore, said characteristics define the context of the present invention, therefore such characteristics will be considered in common with the detailed description.

Further implementation details will not be described, as the person skilled in the art is able to carry out the invention starting from the teaching of the above description.

## Claims

1. Method computer operated for supporting the execution of a mission of a computer-operated agricultural or work vehicle,
wherein the vehicle is equipped with
- an articulated arm (A) connected to a chassis (F) of the vehicle such as to assume a plurality of operating configurations,
- a propulsion system that allows the vehicle to be moved with respect to a support surface,
the method including in cyclic succession:
- (Step 1) Observation, for a predetermined time interval, of a frequency and duration of each operational configuration, and of activation of the propulsion system,
- (Step 2) Determining a current mission of the vehicle,
- (Step 3) checking whether said current mission of the vehicle coincides with a cleaning mission of a support surface of the vehicle, and if so then
- suggestion or automatic activation of an arm Floating function,
wherein said Floating function is designed to keep the arm free to raise and lower by interaction with said support surface.

2. Method according to claim 1, wherein a double-acting hydraulic actuator (A1) is arranged to control a raising and lowering of the articulated arm with respect to the chassis (F) of the vehicle, and wherein said actuator comprises a pair of opposing chambers, and in which in response to the activation of the Floating function said opposing chambers are hydraulically connected to each other, or are both connected to the same hydraulic oil collection tank.

3. Method according to claim 1 or 2, wherein said automatic setting step of the Floating function also includes a setting of an operating parameter of the vehicular propulsion system.

4. The method according to claim 3, wherein said propulsion system comprises a hydrostatic transmission comprising a hydraulic pump adapted to be driven in rotation by a prime mover and a hydraulic motor operatively connected to the hydraulic pump, and wherein said parameter coincides with a displacement value of said hydraulic pump and/or of said hydraulic motor.

5. A computer program comprising computer program code means adapted to perform all steps of claims 1 - 4, when said program is executed on a control unit of work or agricultural vehicle.

6. A computer readable medium having stored the program of claim 5.

7. Work or agricultural vehicle (VEH) equipped with an articulated arm (A) connected to a chassis (F) of the vehicle such as to assume a plurality of operating configurations, a propulsion system such as to allow movement of the vehicle with respect to a surface support, a processing unit (VCU) configured to observe, for a predetermined time interval, a frequency and time duration of each operational configuration, and a frequency and duration of activation of the propulsion system and consequently to determine a current mission of the vehicle and to verify whether said mission of the vehicle coincides with a cleaning mission of a support surface of the vehicle, and if so to suggest or activate a Floating function of the arm, in which said Floating function is suitable for maintaining the arm free to raise and lower by interaction with said support surface.
